# EUROPEAN PATENT SPECIFICATION

(11) **EP 4 477 733 B1**
(45) Date of publication and mention of the grant of the patent: **01.04.2026**
(21) Application number: 23752422.8
(22) Date of filing: 10.02.2023
(51) Int. Cl.: C11D 1/94, C11D 3/04, C11D 3/20, C11D 3/33, C11D 3/37, C11D 3/60, C07C 309/01, C09K 23/08

(54) **COMPOSITION, PREPARATION METHOD, AND USE**
ZUSAMMENSETZUNG, HERSTELLUNGSVERFAHREN UND VERWENDUNG
COMPOSITION, PROCÉDÉ DE PRÉPARATION ET UTILISATION

(30) Priority: 11.02.2022 CN 202210130294
(43) Date of publication of application: 18.12.2024
(73) Proprietor: Guangzhou Tinci Materials Technology Co., Ltd., Guangzhou, Guangdong 510760 (CN)
(72) Inventor: WU, Hailong, Guangzhou, Guangdong 510760 (CN); CHEN, Guojing, Guangzhou, Guangdong 510760 (CN); LIU, Kang, Guangzhou, Guangdong 510760 (CN); TAN, Jie, Guangzhou, Guangdong 510760 (CN); LI, Qiuru, Guangzhou, Guangdong 510760 (CN); LI, Zeyong, Guangzhou, Guangdong 510760 (CN)
(74) Representative: Bandpay & Greuter
(86) International application number: PCT/CN2023/075375
(87) International publication number: WO 2023/151643

(56) References cited:
- EP-B1- 2 021 445
- WO-A1-94/09763
- CN-A- 1 906 288
- CN-A- 101 466 819
- CN-A- 103 288 686
- CN-A- 114 525 180

## Description

### TECHNICAL FIELD

The present application relates to the field of daily chemical materials, specifically a composition, and a preparation method and use thereof.

### BACKGROUND

Since consumers want to buy a cleaner with a thick appearance, then it is not enough for a cleaner to merely clean and remove stains. This is because consumers believe that thick cleaners are products that clean better and have a higher content of active ingredient. At the same time, a thick cleaner is easy to be packed into a packaging container, which is beneficial to reduce the packaging cost and is convenient to use and carry.

Currently, surfactant such as acyl alkyl hydroxyethyl sulfonate is commonly used in a cleaner, and a cleaner containing such surfactant has a good thickening effect. However, the thick cleaner tends to adhere to the surfaces of skin and hair and is not easy to extend, which affects the foaming speed and foaming effect. The foaming speed and foaming effect is one of the important factors for consumers to evaluate the quality of cleaner products.

At present, in order to simultaneously improve the thickening effect and foaming performance of cleaners, surfactant compositions obtained by compounding acyl alkyl hydroxyethyl sulfonates having different molecular formulas or belonging to isomers are usually used to improves the thickening and foaming performance of cleaners. For example, patent document CN1906288B (CN200480040682.3) disclosed acyl alkyl hydroxyethyl sulfonate ester that can be used in consumer products. Acyl alkyl hydroxyethyl sulfonate ester is obtained by reacting one or more carboxylic acids with one or more alkyl-substituted hydroxyalkyl sulfonates under esterification reaction conditions. The alkyl-substituted hydroxyalkyl sulfonates, which are used as raw materials in the production of such ester, are prepared by reacting bisulfite with one or more alkylene oxides. A composition product described in its specification contains acyl alkyl hydroxyethyl sulfonate esters that are isomers to each other, and the isomers mainly lie in the difference in the connection positions of R1 and R2 on an ethyl group. Patent document CN101466819B (CN200780021328.X) disclosed a composition including acyl alkyl hydroxyethyl sulfonate esters which are isomers to each other, in which a molar ratio of a first isomer to a second isomer in paragraph [0027] of the specification of this document is about 19:1 to 1:19; it described the molar ratio of the raw material sodium methyl hydroxyethyl sulfonate; according to Example 4 of this patent, the HO-CH₂CH(CH₃)-SO₃X of the second isomer is easier to react, so the molar ratio of the isomer R-COO-CH₂CH(CH₃)-SO₃X in the acyl alkyl hydroxyethyl sulfonate ester is greater than 5%.

However, the thickening effect and foaming performance of the above-mentioned composition need to be further improved. The present solution is proposed after further in-depth research on the above technical solutions. The technical problem to be solved in the present application is: how to improve the foaming performance, thickening effect and salt resistance of the composition.

### SUMMARY

The purpose of the present application is to provide a composition, including acyl alkyl hydroxyethyl sulfonate esters which are isomers to each other. Researches show that by controlling the content of compound 2, an unexpected foaming effect may be obtained, and better thickening and salt resistance effects may be achieved when the composition is used in daily chemical products.

At the same time, the present application further discloses a preparation method for the composition and a use of the composition.

In order to achieve the above purpose, the present application provides a composition, including a compound 1 and a compound 2; where
a chemical formula of the compound 1 is R-COO-CH(CH₃)CH₂-SO₃X;
a chemical formula of the compound 2 is R-COO-CH₂CH(CH₃)-SO₃X;
a molar ratio of compound 1 to compound 2 is 95.1:4.9 to 99.9:0.1; and
R is alkyl having a carbon atom number of 5-23, and X is selected from the group consisting of hydrogen, alkali metal, alkaline earth metal, aluminum, zinc, ammonium and a combination thereof.

Preferably, R-COOH is selected from the group consisting of caproic acid, caprylic acid, capric acid, cocinic acid, lauric acid, myristic acid, palmitic acid, stearic acid, oleic acid, erucic acid, tetracosanoic acid and a combination thereof.

Preferably, the molar ratio of the compound 1 to the compound 2 is 95.5:4.5 to 99.9:0.1.

Preferably, the molar ratio of the compound 1 to the compound 2 is 97:3 to 99.9:0.1.

Preferably, the molar ratio of the compound 1 to the compound 2 is 98:2 to 99.9:0.1.

Preferably, the molar ratio of the compound 1 to the compound 2 is 99:1 to 99.9:0.1.

In the above composition, a total content of the compound 1 and the compound 2 is not less than 87wt% in the composition.

In the above composition, the total content of the compound 1 and the compound 2 is 87wt%-93wt% in the composition.

In the above composition, a content of fatty acid is ≤7.0wt%, a total content of HO-CH(CH₃)CH₂-SO₃X and HO-CH₂CH(CH₃)-SO₃X is ≤7.0wt%, and a content of water is ≤1.0wt% in the composition.

At the same time, the present application further discloses a preparation method for the composition according to any one as described above, including the following steps:
step 1: for preparation of sodium methyl hydroxyethyl sulfonate, performing a ring-opening reaction with bisulfite and propylene oxide at a reaction temperature of 35.0-53.0°C, and obtaining a reaction product by purification through a PFP (pentafluorophenyl) column, with a molar ratio of bisulfite to propylene oxide of 1:1 to 1:1.04;
step 2: reacting methyl hydroxyethyl sulfonate with the fatty acid in a presence of a catalyst to obtain the composition, with a molar ratio of methyl hydroxyethyl sulfonate to fatty acid of 1:0.91 to 1:1.09;
where, the fatty acid is a C6-C24 fatty acid.

In the preparation method above, in step 1, a reaction time of the ring-opening reaction is 0.6 to 1.0 hours, a reaction pressure of the ring-opening reaction is 0 to 0.04MPa, and a reaction pH of the ring-opening reaction is 5.6 to 6.6, and the reaction product is obtained by the purification through the PFP column after the ring-opening reaction is completed.

In the preparation method above, in step 2, the catalyst is one or more of p-toluenesulfonic acid and its salts, methyl hydroxyethyl sulfonic acid and its salts, phosphorous acid and its salts, sulfuric acid and its salts, citric acid and its salts, zirconium oxide, magnesium oxide, zinc oxide, and aluminum oxide; and a catalyst amount is 0.2-0.9wt%, a reaction temperature in the step 2 is 205.0-230.0°C, a reaction time in the step 2 is 6.5-8.5 hours, and a reaction pressure in the step 2 is 0MPa;
where, the reaction in the step 2 is continued while distilling to remove a part of unreacted fatty acid at a temperature of 205.0-230.0°C under a pressure of 0MPa for 6.0-8.0 hours.

Finally, the present application further discloses a use of the composition above, as an active ingredient having a foaming effect in a daily chemical product.

The present application provides a foaming agent, including the composition mentioned-above.

The present application further discloses another use of the composition above, as an active ingredient having a thickening effect in a daily chemical product.

The present application provides a thickening agent, including the composition mentioned-above.

In the daily chemical product, the daily chemical product contains 0.1-15.0wt% of the composition according to any one as described above.

The daily chemical product may specifically be a detergent containing the composition of the present application. The detergent provided by the present application includes the above-mentioned foaming agent and/or the above-mentioned thickening agent, for example, the detergent may include the above-mentioned foaming agent, or, include the above-mentioned thickening agent, or simultaneously includes the foaming agent and the thickening agent mentioned-above.

In the detergent, the detergent contains 0.1wt% to 15.0wt% of the composition as described above.

In addition, the detergent further contains at least one of the following ingredients: an anionic surfactant, a nonionic surfactant, an amphoteric surfactant, a cationic surfactant, a functional additive, and a solvent.

In some embodiments, the anionic surfactant is selected from one or more of:
ammonium dodecyl sulfate, lauryl polyoxyethylene ether triethanolamine sulfate, lauryl polyoxyethylene ether monoethanolamine sulfate, diethanolamine lauryl sulfate, lauryl polyoxyethylene ether diethanolamine sulfate, sodium lauryl monoglyceride sulfate, sodium lauryl sulfate, lauryl polyoxyethylene ether sodium sulfate, fatty acid, lauryl potassium sulfate, lauryl polyoxyethylene ether ammonium sulfate, triethylamine lauryl sulfate, lauryl polyoxyethylene ether triethylamine sulfate, sodium alkylbenzene sulfonate, ammonium alkylbenzene sulfonate, sodium methyl fatty acyl taurate, triethanolamine lauryl sulfate, lauryl polyoxyethylene ether potassium sulfate, sodium lauryl sarcosinate, sodium lauroyl sarcosinate, lauryl sarcosinate, fatty alcohol glycerol ether sulfonate, cocoyl sarcosinate, ammonium cocoyl sulfate, ammonium dodecanoyl sulfate, sodium cocoyl sulfate, fatty alcohol ether carboxylate, sodium lauroyl sulfate, potassium cocoyl sulfate, potassium lauryl sulfate, monoethanolamine cocoyl sulfate, and monoethanolamine lauryl sulfate.

In some embodiments, the amphoteric surfactant is selected from one or more of:
sodium cocaminopropionate, sodium laurimino dipropionate, ammonium cocoyl aminopropionate, ammonium cocaminodipropionate, ammonium cocoyl amphoteric acetate, ammonium cocoyl amphoteric hydroxypropyl sulfonate, ammonium cocoyl amphoteric propionate, ammonium cornamphopropionate, ammonium lauryl aminopropionate, ammonium lauroyl amphoteric acetate, ammonium lauroyl amphoteric hydroxypropyl sulfonate, sodium cocaminodipropionate, sodium cocoyl amphoteric acetate, sodium cocoyl amphoteric hydroxypropyl sulfonate, sodium cocoyl amphoteric propionate, sodium cornamphopropionate, sodium lauryl aminopropionate, sodium lauroyl amphoteric acetate, sodium lauroyl amphoteric hydroxypropyl sulfonate, sodium lauroyl amphoteric propionate, ammonium lauroyl amphoteric propionate, ammonium lauryl imino dipropionate, triethanonlamine cocaminopropionate, triethanonlamine cocaminodipropionate, cocoyl amphoteric triethanolamine acetate, cocoyl amphoteric hydroxypropyl triethanolamine sulfonate, cocoyl amphoteric triethanolamine propionate, lauryl triethanolamine aminopropionate, lauroyl amphoteric triethanolamine acetate, lauroyl amphoteric hydroxypropyl triethanolamine sulfonate, lauroyl amphoteric triethanolamine propionate, triethanolamine cornamphopropionate, triethanolamine laurimino dipropionate, cocoyl amphoteric dipropionic acid, disodium decanoyl amphoteric diacetate, disodium decanoyl amphoteric dipropionate, disodium octyl amphoteric diacetate, disodium octyl amphoteric dipropionate, disodium cocoyl amphoteric carboxyethyl hydroxypropyl sulfonate, disodium cocoyl amphoteric diacetate, disodium cocoyl amphoteric dipropionate, disodium dicarboxyethyl coco propylene diamine, disodium lauryl polyoxyethylene ether-5 carboxyl amphoteric diacetate, disodium laurimino dipropionate, disodium lauroyl amphoteric diacetate, disodium lauroyl amphoteric dipropionate, oil-based amphoteric disodium dipropionate, disodium PPG-2-isodecanol polyether-7 carboxyl amphoteric diacetate, lauryl aminopropionic acid, lauroyl amphoteric dipropionic acid, lauryl aminopropylglycine, lauryl diethylene diaminoglycine, sodium cocoyl amphoteric diacetate, sodium lauroyl amphoteric diacetate, cocoamido ethyl betaine, cocoamido propyl amine oxide, cocamidopropyl betaine, cocamidopropyl dimethylaminohydroxypropyl hydrolyzed collagen, cocamidopropyldimonium hydroxypropyl hydrolyzed collagen, cocoamido propyl hydroxy sulfobetaine, coco-betaine amido amphoteric propionate, coco-betaine, coco-hydroxysultaine, cocamidopropyl betaine, oleamidopropyl betaine, lauramido propyl betaine, lauryl betaine, lauryl hydroxy sulfobetaine, lauryl sulfobetaine, and coco-sultaine.

In some embodiments, the nonionic surfactant is selected from one or more of:
cocamide, fatty alcohol polyoxyethylene ether, fatty alcohol, alkyl glucoside, cocamidomethyl MEA, cocamide DEA, cocamide MEA, cocamide MIPA, laurylamide DEA, laurylamide MEA, laurylamide MIPA, tetradecanamide DEA, tetradecanamide MEA, PEG-20 cocamide MEA, PEG-2 cocamide, PEG-3 cocamide, PEG-4 cocamide, PEG-5 cocamide, PEG-6 cocamide, PEG-7 cocamide, PEG-3 lauramide, PEG-5 lauramide, PEG-3 oleamide, PPG-2 cocamide, and PPG-2 hydroxyethyl cocamide.

In some embodiments, the cationic surfactant is selected from one or more of:
alkyl trimethyl ammonium chloride, alkyl trimethyl ammonium bromide, methyl alkyl trimethyl sulfate, ethylammonium alkyl dimethyl ethyl sulfate, fatty amidopropyl trimethyl ammonium chloride, fatty amidopropyl trimethyl ammonium bromide, fatty amidopropyl trimethyl ammonium methyl sulfate, fatty amidopropyl dimethyl ethyl ammonium ethyl sulfate, alkyl dihydroxyethyl methyl ammonium chloride, alkyl dihydroxyethyl methyl ammonium bromide, alkyl dihydroxyethyl methylammonium methyl sulfate, alkyl dihydroxyethyl ethyl ammonium ethyl sulfate, fatty amidopropyl dihydroxyethyl methyl ammonium chloride, fatty amidopropyl dihydroxyethyl methyl ammonium bromide, fatty amidopropyl dihydroxyethyl methyl ammonium methyl sulfate, fatty amidopropyl dihydroxyethyl ethyl ammonium ethyl sulfate, fatty amidoethyl trimethyl ammonium chloride, fatty amidoethyl trimethyl ammonium bromide, fatty amidoethyl trimethyl ammonium methyl sulfate, fatty amidoethyl dimethyl ethyl ammonium ethyl sulfate, fatty amidoethyl dihydroxyethyl methyl ammonium chloride, fatty amidoethyl dihydroxyethyl methyl ammonium bromide, fatty amidoethyl dihydroxyethyl methyl ammonium methyl sulfate, and fatty amidoethyl dihydroxyethyl ethylammonium ethyl sulfate.

In some embodiments, the functional additive is selected from one or more of vitamin, chelating agent, flavor, whitening agent, enzyme, conditioning agent, thickening agent, attractant, dye, pigment, bleaching agent and pearlescent agent.

In some embodiments, the solvent is selected from one or more of water, propylene glycol, ethanol, glycerin, polyethylene glycol and isopropanol.

In some embodiments, the chelating agent is selected from one or more of: ethylenediamine tetraacetic acid and its salts, aminotriacetic acid and its salts, diethylene triamine pentaacetic acid and its salts, citric acid and its salts, tartaric acid and its salts, gluconic acid and its salts, hydroxyethyl ethylenediamine triacetic acid and its salts, dihydroxyethyl glycine and its salts, organic polyphosphonic acid and its salts, polyacrylic acid and its salts, polymethacrylic acid and its salt, hydrolyzed polymaleic anhydride and fumaric acid-allyl sulfonic acid copolymer.

In some embodiments, the conditioning agent is selected from one or more of cationic guar gum polymer, cationic non-guar galactomannan polymer, cationic modified starch polymer, cationic copolymer of acrylamide monomer and cationic monomer, cationic cellulose polymer, polysiloxane and cationic cassia gum polymer.

In some embodiments, the thickening agent is selected from one or more of: modified hydroxyethyl cellulose, hydrophobically modified polyacrylate, hydrophobically modified polyacrylic acid, hydrophobically modified polyacrylamide, PEG-120 methyl glucose dioleate, PEG-40 dehydrated sorbitan tetraoleate, PEG-60 dehydrated sorbitan tetraoleate, PEG-150 pentaerythritol tetrastearate, PEG-55 propylene glycol oleate and PEG-150 distearate.

In some embodiments, the pearlescent agent is selected from one or two of ethylene glycol distearate and ethylene glycol monostearate.

Compared with prior art, the beneficial effect of the present application is as follows.

The composition of the present application contains acyl alkyl hydroxyethyl sulfonate esters which are isomers to each other; and the following conclusions are obtained after repeated studies: by controlling the content of compound 2, an unexpected foaming effect may be obtained, and better thickening and salt resistance effects may be achieved when the composition is used in daily chemical products.

### BRIEF DESCRIPTION OF DRAWINGS

FIG. 1 depicts the difference in foaming performance of a composition under different contents of R-COO-CH₂CH(CH₃)-SO₃X in the composition.
FIG. 2 depicts the difference in thickening performance of a composition in a detergent under different contents of R-COO-CH₂CH(CH₃)-SO₃X in the composition.
FIG. 3 depicts the difference in salt tolerance performance of a composition in a detergent under different contents of R-COO-CH₂CH(CH₃)-SO₃X in the composition.
FIG. 4 shows the difference in foaming speed between acyl alkyl hydroxyethyl sulfonate esters (R-COO-CH(CH₃)CH₂-SO₃X and R-COO-CH₂CH(CH₃)-SO₃X) and sodium fatty alcohol ether sulfate (AES).

### DESCRIPTION OF EMBODIMENTS

The technical solutions of the embodiments in the present application will be clearly and completely described below in combination with the drawings of the embodiments in the present application. Obviously, the described embodiments are a part of the embodiments of the present application, but not all of them. Based on the embodiments in the present application, all other embodiments obtained by the person skilled in the art without creative work fall within the protection scope of the present application.

### Example 1

### Preparation of methyl hydroxyethyl sulfonates (HO-CH(CH₃)CH₂-SO₃X and HO-CH₂CH(CH₃)-SO₃X)

40.0% aqueous solution of sodium bisulfite (130.6g, 0.50mol) was added into a reaction kettle of 250ml, followed by adjusting pH to be 5.6, performing nitrogen replacement, keeping a pressure of 0MPa, and heating to 35°C. Propylene oxide (30.2g, 0.52mol) was slowly added, and after completing this addition, the temperature was controlled to 50°C, and the mixture was reacted while keeping the temperature for 1 hour. After the reaction was completed, the reaction product was purified through a PFP column to obtain a solution of methyl hydroxyethyl sulfonates (HO-CH(CH₃)CH₂-SO₃X and HO-CH₂CH(CH₃)-SO₃X), which was spray dried to remove water and propylene glycol, with the residual propylene glycol ≤0.1%.

In this example, by controlling the parameters of the PFP column, a molar ratio of HO-CH(CH₃)CH₂-SO₃X and HO-CH₂CH(CH₃)-SO₃X may be controlled, for example, as for Example 2, the molar ratio of HO-CH(CH₃)CH₂-SO₃X to HO-CH₂CH(CH₃)-SO₃X may be controlled at 99:1; as for Example 3, the molar ratio of HO-CH(CH₃)CH₂-SO₃X to HO-CH₂CH(CH₃)-SO₃X may be controlled to 95.5:4.5; as for Example 4, the molar ratio of HO-CH(CH₃)CH₂-SO₃X to HO-CH₂CH(CH₃)-SO₃X may be controlled to 97:3; as for Example 5, the molar ratio of HO-CH(CH₃)CH₂-SO₃X to HO-CH₂CH(CH₃)-SO₃X may be controlled at 98:2.

The proportion of the isomers in the final product has a certain relationship with fatty acid, catalyst and reaction process parameters.

### Example 2

### Preparation of acyl alkyl hydroxyethyl sulfonate esters (R-COO-CH(CH₃)CH₂-SO₃X and R-COO-CH₂CH(CH₃)-SO₃X)

Cocinic acid (82.0g, 0.40mol), methyl hydroxyethyl sulfonates (HO-CH(CH₃)CH₂-SO₃X and HO-CH₂CH(CH₃)-SO₃X) (68.4g, 0.42mol), zinc methyl hydroxyethyl sulfonate (0.8g) were added into a reaction kettle of 250ml, an appropriate amount of nitrogen gas was introduced under a pressure at 0MPa, and reactants were heated under stirring to 210.0°C and reacted for 8 hours. The reaction was continued while distilling to remove a part of unreacted fatty acids at a temperature of 215.0°C under a pressure of 0MPa for 7.0 hours. In the composition obtained, the total content of compound 1 and compound 2 was 88.1%, the content of residual fatty acid was 5.2%, and the content of residual methyl hydroxyethyl sulfonates (HO-CH(CH₃)CH₂-SO₃X and HO-CH₂CH(CH₃)-SO₃X) was 3.7%, where the mole ratio of R-COO-CH(CH₃)CH₂-SO₃X to R-COO-CH₂CH(CH₃)-SO₃X was 99.1:0.9.

### Example 3

### Preparation of acyl alkyl hydroxyethyl sulfonate esters (R-COO-CH(CH₃)CH₂-SO₃X and R-COO-CH₂CH(CH₃)-SO₃X)

Myristic acid (88.0g, 0.39mol), methyl hydroxyethyl sulfonates (HO-CH(CH₃)CH₂-SO₃X and HO-CH₂CH(CH₃)-SO₃X) (68.4g, 0.42mol), and zinc phosphite (0.9g) were added into a reaction kettle of 250ml, an appropriate amount of nitrogen gas was introduced under a pressure at 0MPa, and the reactants were heated under stirring to 215.0°C and reacted for 7.5 hours. The reaction was continued while distilling to remove a part of unreacted fatty acids at a temperature of 220.0°C under a pressure of 0MPa for 6.8 hours. In the composition obtained, the total content of compound 1 and compound 2 was 92.2%, the content of residual fatty acid was 5.1%, and the content of residual methyl hydroxyethyl sulfonates (HO-CH(CH₃)CH₂-SO₃X and HO-CH₂CH(CH₃)-SO₃X) was 1.9%, where the mole ratio of R-COO-CH(CH₃)CH₂-SO₃X to R-COO-CH₂CH(CH₃)-SO₃X was 95.5:4.5.

### Example 4

### Preparation of acyl alkyl hydroxyethyl sulfonate esters (R-COO-CH(CH₃)CH₂-SO₃X and R-COO-CH₂CH(CH₃)-SO₃X)

Lauric acid (86.0g, 0.43mol), methyl hydroxyethyl sulfonates (HO-CH(CH₃)CH₂-SO₃X and HO-CH₂CH(CH₃)-SO₃X) (68.4g, 0.42mol), and zinc oxide (0.8g) were added into a reaction kettle of 250ml, an appropriate amount of nitrogen gas was introduced under a pressure at 0MPa, and the reactants were heated under stirring to 215.0°C and reacted for 7.5 hours. The reaction was continued while distilling to remove a part of unreacted fatty acids at a temperature of 225.0°C under a pressure of 0MPa for 6.5 hours. In the composition obtained, the total content of compound 1 and compound 2 was 88.3%, the content of residual fatty acid was 5.0%, and the content of residual methyl hydroxyethyl sulfonates (HO-CH(CH₃)CH₂-SO₃X and HO-CH₂CH(CH₃)-SO₃X) was 2.9%, where the mole ratio of R-COO-CH(CH₃)CH₂-SO₃X to R-COO-CH₂CH(CH₃)-SO₃X was 96.9:3.1.

In the present example, by controlling the purification parameters of the PFP column for purifying in Example 1, the molar ratio of HO-CH(CH₃)CH₂-SO₃X to HO-CH₂CH(CH₃)-SO₃X may be controlled to approximately 99.9:0.1, 99:1, 97:3, and 95.1:4.9, realizing that the content of the isomer of acyl lauryl hydroxyethyl sulfonate ester is adjusted between 0.1mol% and 4.9mol%.

### Example 5

### Preparation of acyl alkyl hydroxyethyl sulfonate esters (R-COO-CH(CH₃)CH₂-SO₃X and R-COO-CH₂CH(CH₃)-SO₃X)

Stearic acid (125.0g, 0.44mol), methyl hydroxyethyl sulfonates (HO-CH(CH₃)CH₂-SO₃X and HO-CH₂CH(CH₃)-SO₃X) (68.4g, 0.42mol), and zinc citrate (0.8g) were added into a reaction kettle of 250ml, an appropriate amount of nitrogen gas was introduced under a pressure at 0MPa, and the reactants were heated under stirring to 225.0°C and reacted for 7 hours. The reaction was continued while distilling to remove a part of unreacted fatty acids at a temperature of 225.0°C under a pressure of 0MPa for 6.5 hours. In the composition obtained, the total content of compound 1 and compound 2 was 89.3%, the content of residual fatty acid was 5.10%, and the content of residual methyl hydroxyethyl sulfonates (HO-CH(CH₃)CH₂-SO₃X and HO-CH₂CH(CH₃)-SO₃X) was 3.5%, where the mole ratio of R-COO-CH(CH₃)CH₂-SO₃X to R-COO-CH₂CH(CH₃)-SO₃X was 97.9:2.1.

### Example 6

Use of the composition of the present application in a detergent

### (1) Formulation ingredients

**Table 1 Detergent formulation table**

| Ingredient | Ingredient name | Mass fraction (%) |
|---|---|---|
| A | deionized water | 77.0 |
| | disodium ethylenediamine tetraacetate | 0.1 |
| | acyl alkyl hydroxyethyl sulfonate ester | 6.0 |
| | sodium cocoyl amphoteric acetate | 3.0 |
| B | cationic guar gum polymer | 0.5 |
| C | alkyl glycoside | 2.0 |
| | cocamidopropyl betaine | 10.0 |
| | sodium benzoate | 0.5 |
| | citric acid | 0.4 |
| | sodium chloride | 0.5 |

### (2) Formulation process

a. Heating and stirring phase A to dissolve evenly.
b. After dissolving the phase A evenly, adding phase B and continuing heating and stirring to dissolve evenly.
c. After dissolving the phase B evenly, cooling down to room temperature, adding phase C, and stirring evenly.

### Example 7

Use of the composition of the present application in a detergent

### (1) Formulation ingredients

**Table 2 Detergent formulation table**

| Ingredient | Ingredient name | Mass fraction (%) |
|---|---|---|
| A | deionized water | 78.0 |
| | disodium ethylenediamine tetraacetate | 0.1 |
| | acyl alkyl hydroxyethyl sulfonate ester | 10.0 |
| | sodium cocoyl amphoteric acetate | 3.0 |
| B | cationic cellulose polymer | 0.5 |
| C | coconut amide MEA | 2.0 |
| | cocamidopropyl betaine | 5.0 |
| | sodium benzoate | 0.5 |
| | citric acid | 0.4 |
| | sodium chloride | 0.5 |

### (2) Formulation process

a. Heating and stirring phase A to dissolve evenly.
b. After dissolving the phase A evenly, adding phase B and continuing heating and stirring to dissolve evenly.
c. After dissolving the phase B evenly, cooling down to room temperature, adding phase C, and stirring evenly.

### Comparative example 1

Preparation of a composition containing 5.5% of compound 2

Its specific preparation method is as follows.

40.0% aqueous solution of sodium bisulfite (130.6g, 0.50mol) was added into a reaction kettle of 250ml, followed by adjusting pH to be 6.7-7.5, performing nitrogen replacement, keeping a pressure of 0.45MPa, and heating to 70°C. Propylene oxide (30.2g, 0.52mol) was slowly added, and after completing this addition, the temperature was controlled to 80°C, and the mixture was reacted while keeping the temperature for 1.5 hour. After the reaction was completed, methyl hydroxyethyl sulfonates (HO-CH(CH₃)CH₂-SO₃X and HO-CH₂CH(CH₃)-SO₃X) were obtained by powder spray drying.

Stearic acid (125.0g, 0.44mol), methyl hydroxyethyl sulfonates (HO-CH(CH₃)CH₂-SO₃X and HO-CH₂CH(CH₃)-SO₃X) (68.4g, 0.42mol), and zinc citrate (0.8g) were added into a reaction kettle of 250ml, an appropriate amount of nitrogen gas was introduced under a pressure at 0MPa, and the reactants were heated under stirring to 215.0°C and reacted for 6 hours. Then the unreacted stearic acid was removed by vacuum distillation at 10mmHg. In the composition obtained, the total content of compound 1 and compound 2 was 84.3%, the content of residual fatty acid was 6.10%, and the content of residual methyl hydroxyethyl sulfonates (HO-CH(CH₃)CH₂-SO₃X and HO-CH₂CH(CH₃)-SO₃X) was 6.5%, where with the mole ratio of R-COO-CH(CH₃)CH₂-SO₃X to R-COO-CH₂CH(CH₃)-SO₃X was 94.5:5.5.

### Comparative example 2

Preparation of a composition containing 6.5% of compound 2

Its specific preparation method is as follows.

40.0% aqueous solution of sodium bisulfite (130.6g, 0.50mol) was added into a reaction kettle of 250ml, followed by adjusting pH to be 6.7-7.5, performing nitrogen replacement, keeping a pressure of 0.45MPa, and heating to 70°C. Propylene oxide (30.2g, 0.52mol) was slowly added, and after completing this addition, the temperature was controlled to 80°C, and the mixture was reacted while keeping the temperature for 1.5 hour. After the reaction was completed, methyl hydroxyethyl sulfonates (HO-CH(CH₃)CH₂-SO₃X and HO-CH₂CH(CH₃)-SO₃X) were obtained by powder spray drying.

Myristic acid (98.0g, 0.43mol), methyl hydroxyethyl sulfonates (HO-CH(CH₃)CH₂-SO₃X and HO-CH₂CH(CH₃)-SO₃X) (68.4g, 0.42mol), and zinc phosphide (0.8g) were added into a reaction kettle of 250ml, an appropriate amount of nitrogen gas was introduced under a pressure at 0MPa, and the reactants were heated under stirring to 225.0°C and reacted for 6 hours. Then the unreacted myristic acid was removed by vacuum distillation at 15mmHg. In the composition obtained, the total content of compound 1 and compound 2 was 84.8%, the content of residual fatty acid was 6.60%, and the content of residual methyl hydroxyethyl sulfonates (HO-CH(CH₃)CH₂-SO₃X and HO-CH₂CH(CH₃)-SO₃X) was 6.0%, where the mole ratio of R-COO-CH(CH₃)CH₂-SO₃X to R-COO-CH₂CH(CH₃)-SO₃X was 93.5:6.5.

### Performance Testing

Foam performance test method: adding 250ml of deionized aqueous solution of 0.15% acyl alkyl hydroxyethyl sulfonate ester into a SITA foam meter; setting a test temperature of 40°C, a stirring speed of 900rpm, a number of stirring of 30, and an each stirring time of 10s; and automatically testing a foam volume that is expressed in ml.

The abscissa is the number of stirring, and the ordinate is the foam volume.

Where, the preparation method of the product with an isomer concentration of 0.1mol%-4.9mol% refers to Example 4;
the preparation methods of products with an isomer concentration of 5.5mol% and 6.5mol% refer to Comparative example 1 and Comparative example 2 respectively.

Test method for the thickening ability of detergent: the test formulation and process are shown in Example 6, and the detergents of different viscosities are obtained by adding in an equal amount of acyl alkyl hydroxyethyl sulfonate ester with different contents of compound 2, and tested for their thickening abilities.

Where, the preparation method of the product with an isomer concentration of 0.1mol%-4.9mol% refers to Example 4;
the preparation methods of products with an isomer concentration of 5.5mol% and 6.5mol% refer to Comparative example 1 and Comparative example 2 respectively.

Test method for the salt resistance of detergents: the test formulation and process are shown in Example 6, and the test method includes: adding an equal amount of acyl alkyl hydroxyethyl sulfonate ester with different contents of compound 2, and then, gradually increasing the content of sodium chloride, and observing whether the obtained detergent is turbid, thereby getting its salt resistance.

Where, the preparation method of the product with an isomer concentration of 0.1mol%-4.9mol% refers to Example 4;
the preparation methods of products with an isomer concentration of 5.5mol% and 6.5mol% refer to Comparative example 1 and Comparative example 2 respectively.

It should be noted that: the mol% shown here is not a percentage of isomer accounting for the total amount of the product of Example 4, but refers to a percentage of isomer accounting for the total amount of acyl alkyl hydroxyethyl sulfonate ester.

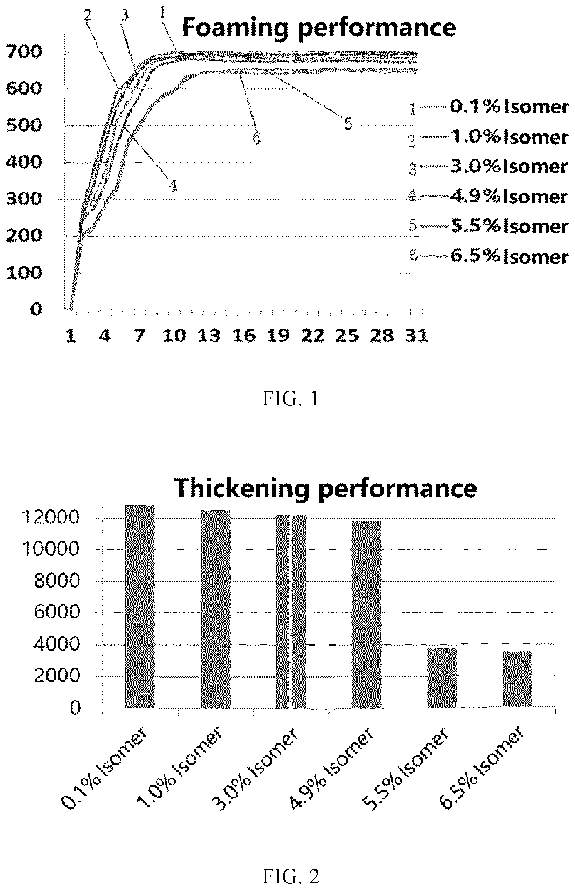

Test results are shown in FIG. 1-FIG. 4.

In FIG. 1, a changing tendency of the foaming performance of the composition when the content of compound 2 ranges from 0.1mol% to 6.5mol% is shown. It can be seen that when the content of compound 2 is in a range of 0. 1mol% to 4.9mol%, the foaming performance of the composition is obviously excellent.

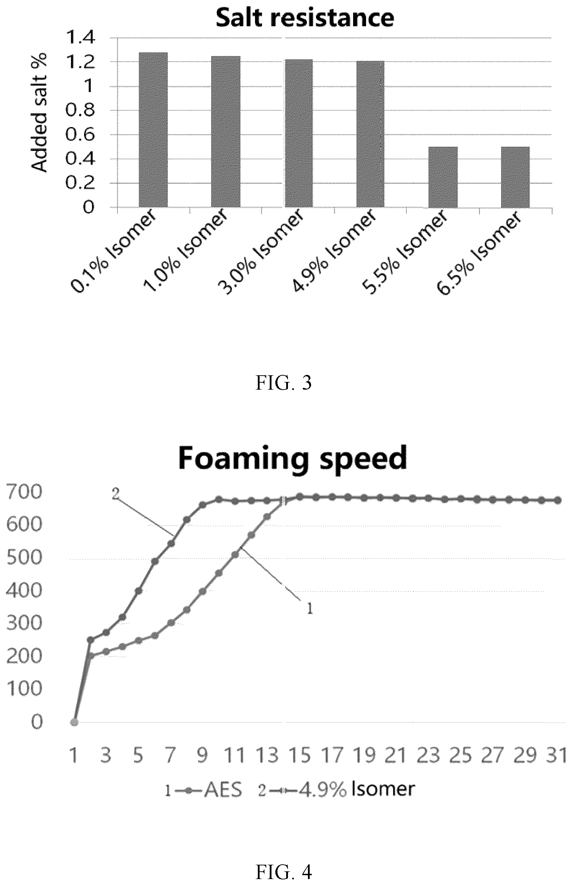

In FIG. 2 and FIG. 3, a changing tendency of the application ability of the composition formulation when the content of compound 2 ranges from 0.1mol% to 6.5mol% is shown. The thickening ability and salt resistance are significantly superior to those of the composition with higher content of compound 2.

In FIG. 4, a difference in the foaming speed of AES and the composition containing 4.9mol% of the compound 2 is shown.

It should be emphasized that when the content of compound 2 is 4.9mol%, the foaming speed of the composition is better than that of the AES.

In summary, in the present application, by controlling the proportions of isomers, excellent foaming performance and application performance of the composition can be achieved.

## Claims

1. A composition, comprising a compound 1 and a compound 2, wherein
a chemical formula of the compound 1 is R-COO-CH(CH₃)CH₂-SO₃X,
a chemical formula of the compound 2 is R-COO-CH₂CH(CH₃)-SO₃X,
a molar ratio of compound 1 to compound 2 is 95.1:4.9 to 99.9:0.1, and
R is alkyl having a carbon atom number of 5-23, and X is selected from one or more of hydrogen, alkali metal, alkaline earth metal, aluminum, zinc and ammonium.

2. The composition according to claim 1, wherein the molar ratio of the compound 1 to the compound 2 is 95.5:4.5 to 99.9:0.1.

3. The composition according to claim 1, wherein a total content of the compound 1 and the compound 2 is not less than 87wt% in the composition.

4. The composition according to claim 2, wherein a total content of the compound 1 and the compound 2 is 87wt%-93wt% in the composition.

5. The composition according to claim 1, wherein a content of fatty acid is ≤7.0wt%, a total content of HO-CH(CH₃)CH₂-SO₃X and HO-CH₂CH(CH₃)-SO₃X is ≤7.0wt%, and a content of water is ≤1.0wt% in the composition.

6. A preparation method for the composition according to any one of claims 1-5, comprising the following steps:
step 1: subjecting bisulfite and propylene oxide to a ring-opening reaction at a reaction temperature of 35.0-53.0°C to obtain a reaction product; and subjecting the reaction product to purification through a PFP (pentafluorophenyl) column to obtain sodium methyl hydroxyethyl sulfonate with a molar ratio of bisulfite to propylene oxide of 1:1 to 1:1.04;
step 2: reacting methyl hydroxyethyl sulfonate with fatty acid in a presence of a catalyst to obtain the composition, with a molar ratio of methyl hydroxyethyl sulfonate to the fatty acid of 1:0.91 to 1:1.09;
wherein the fatty acid is a C6-C24 fatty acid.

7. The preparation method according to claim 6, wherein, in the step 1, a reaction time of the ring-opening reaction is 0.6 to 1.0 hours, a reaction pressure of the ring-opening reaction is 0 to 0.04MPa, and a reaction pH of the ring-opening reaction is 5.6 to 6.6, and the reaction product is obtained by the purification through the PFP column after the ring-opening reaction is completed.

8. The preparation method according to claim 6, wherein, in the step 2, the catalyst is selected from the group consisting of p-toluenesulfonic acid and its salts, methyl hydroxyethyl sulfonic acid and its salts, phosphorous acid and its salts, sulfuric acid and its salts, citric acid and its salts, zirconium oxide, magnesium oxide, zinc oxide, aluminum oxide and a combination thereof; and a catalyst amount is 0.2-0.9wt%, a reaction temperature in the step 2 is 205.0-230.0°C, a reaction time in the step 2 is 6.5-8.5 hours, and a reaction pressure in the step 2 is 0MPa; and
the reaction in the step 2 is continued while distilling to remove a part of unreacted fatty acid at a temperature of 205.0-230.0°C under a pressure of 0MPa for 6.0-8.0 hours.

9. Use of the composition according to any one of claims 1-5, as an active ingredient having a foaming effect in a daily chemical product, or, as an active ingredient having a thickening effect in a daily chemical product.

10. A foaming agent, comprising the composition according to any one of claims 1-5.

11. A thickening agent, comprising the composition according to any one of claims 1-5.

12. A daily chemical product, wherein the daily chemical product contains 0.1-15.0wt% of the composition according to any one of claims 1-5.

13. The daily chemical product according to claim 12, wherein the daily chemical product comprises a detergent.

## Patentansprüche

1. Zusammensetzung, umfassend eine Verbindung 1 und eine Verbindung 2, wobei
eine chemische Formel der Verbindung 1 R-COO-CH(CH₃)CH₂-SO₃X ist,
eine chemische Formel der Verbindung 2 R-COO-CH₂CH(CH₃)-SO₃X ist,
ein Molverhältnis von Verbindung 1 zu Verbindung 2 95,1:4,9 bis 99,9:0,1 ist, und
R ein Alkylrest mit 5 - 23 Kohlenstoffatomen ist und X ausgewählt ist aus einem oder mehreren von Wasserstoff, Alkalimetall, Erdalkalimetall, Aluminium, Zink und Ammonium.

2. Zusammensetzung nach Anspruch 1, wobei das Molverhältnis von Verbindung 1 zu Verbindung 2 95,5:4,5 bis 99,9:0,1 ist.

3. Zusammensetzung nach Anspruch 1, wobei der Gesamtgehalt der Verbindung 1 und der Verbindung 2 in der Zusammensetzung nicht weniger als 87 Gew.% ist

4. Zusammensetzung nach Anspruch 2, wobei der Gesamtgehalt der Verbindung 1 und der Verbindung 2 in der Zusammensetzung 87 Gew.% - 93 Gew. % ist

5. Zusammensetzung nach Anspruch 1, wobei ein Gehalt von Fettsäure ≤ 7,0 Gew.%, ein Gesamtgehalt von HO-CH(CH₃)CH₂-SO₃X und HO-CH₂CH(CH₃)-SO₃X ≤ 7,0 Gew.% und ein Gehalt von Wasser ≤ 1,0 Gew.% in der Zusammensetzung ist.

6. Verfahren zur Herstellung der Zusammensetzung nach einem der Ansprüche 1 - 5, umfassend die folgenden Schritte:
Schritt 1: Unterziehen von Bisulfit und Propylenoxid einer Ringöffnungsreaktion bei einer Reaktionstemperatur von 35,0 - 53,0 °C, um ein Reaktionsprodukt zu erhalten; und Unterziehen des Reaktionsprodukts einer Reinigung durch eine PFP (Pentafluorphenyl)-Säule, um Natriummethylhydroxyethylsulfonat mit einem Molverhältnis von Bisulfit zu Propylenoxid von 1:1 bis 1:1,04 zu erhalten;
Schritt 2: Reagieren von Methylhydroxyethylsulfonat mit Fettsäure in Gegenwart eines Katalysators, um die Zusammensetzung mit einem Molverhältnis von Methylhydroxyethylsulfonat zu Fettsäure von 1:0,91 bis 1:1,09 zu erhalten;
wobei es sich bei der Fettsäure um eine C6 - C24-Fettsäure handelt.

7. Herstellungsverfahren nach Anspruch 6, wobei in Schritt 1 eine Reaktionszeit der Ringöffnungsreaktion 0,6 bis 1,0 Stunden beträgt, ein Reaktionsdruck der Ringöffnungsreaktion 0 bis 0,04 MPa beträgt und ein Reaktions pH-Wert der Ringöffnungsreaktion 5,6 bis 6,6 beträgt und das Reaktionsprodukt durch Reinigung mittels der PFP-Säule erhalten wird, nachdem die Ringöffnungsreaktion abgeschlossen ist.

8. Herstellungsverfahren nach Anspruch 6, wobei in Schritt 2 der Katalysator ausgewählt ist aus der Gruppe, bestehend aus p-Toluolsulfonsäure und ihren Salzen, Methylhydroxyethylsulfonsäure und ihren Salzen, Phosphorsäure und ihren Salzen, Schwefelsäure und ihren Salzen, Citronensäure und ihren Salzen, Zirkoniumdioxid, Magnesiumoxid, Zinkoxid, Aluminiumoxid und einer Kombination davon; und eine Katalysatormenge 0,2 - 0, 9 Gew.%, eine Reaktionstemperatur in Schritt 2 205,0 - 230,0 °C, eine Reaktionszeit in Schritt 2 6,5 - 8,5 Stunden beträgt und ein Reaktionsdruck in Schritt 2 0MPa beträgt; und
die Reaktion in Schritt 2 unter Destillation fortgesetzt wird, um einen Teil der nicht reagierten Fettsäure bei einer Temperatur von 205,0 - 230,0 °C unter einem Druck von 0 MPa während 6,0 - 8,0 Stunden zu entfernen.

9. Verwendung der Zusammensetzung nach einem der Ansprüche 1 - 5 als Wirkstoff mit schäumender Wirkung in einem chemischen Alltagsprodukt oder als Wirkstoff mit verdickender Wirkung in einem chemischen Alltagsprodukt.

10. Schaumbildner, umfassend die Zusammensetzung nach einem der Ansprüche 1 - 5.

11. Verdickungsmittel, umfassend die Zusammensetzung nach einem der Ansprüche 1 - 5.

12. Chemisches Alltagsprodukt, wobei das chemische Alltagsprodukt 0,1 - 15,0 Gew.% der Zusammensetzung nach einem der Ansprüche 1 - 5 enthält.

13. Chemisches Alltagsprodukt nach Anspruch 12, wobei das chemische Alltagsprodukt ein Reinigungsmittel umfasst.

## Revendications

1. Composition, comprenant un composé 1 et un composé 2, dans laquelle
une formule chimique du composé 1 est R-COO-CH(CH₃)CH₂-SO₃X,
une formule chimique du composé 2 est R-COO-CH₂CH(CH₃)-SO₃X,
un rapport molaire du composé 1 au composé 2 est de 95,1:4,9 à 99,9:0,1, et
R est un groupe alkyle ayant un nombre d'atomes de carbone de 5 à 23, et X est choisi parmi un ou plusieurs parmi un atome d'hydrogène, un métal alcalin, un métal alcalino-terreux, l'aluminium, le zinc et l'ammonium.

2. Composition selon la revendication 1, dans laquelle le rapport molaire du composé 1 au composé 2 est de 95,5:4,5 à 99,9:0,1.

3. Composition selon la revendication 1, dans laquelle une teneur totale en composé 1 et composé 2 n'est pas inférieure à 87 % en poids dans la composition.

4. Composition selon la revendication 2, dans laquelle une teneur totale en composé 1 et composé 2 est de 87 % en poids à 93 % en poids dans la composition.

5. Composition selon la revendication 1, dans laquelle une teneur en acide gras est ≤ 7,0 % en poids, une teneur totale en HO-CH(CH₃)CH₂-SO₃X et HO-CH₂CH(CH₃)-SO₃X est ≤ 7,0 % en poids, et une teneur en eau est ≤ 1,0 % en poids dans la composition.

6. Procédé de préparation pour la composition selon l'une quelconque des revendications 1 à 5, comprenant les étapes suivantes :
étape 1 : soumettre du bisulfite et de l'oxyde de propylène à une réaction d'ouverture de cycle à une température de réaction de 35,0 à 53,0 °C pour obtenir un produit de réaction ; et soumettre le produit de réaction à une purification à travers une colonne PFP (pentafluorophényle) pour obtenir du méthylhydroxyéthylsulfonate de sodium avec un rapport molaire bisulfite à oxyde de propylène de 1:1 à 1:1,04 ;
étape 2 : faire réagir le méthylhydroxyéthylsulfonate avec un acide gras en présence d'un catalyseur pour obtenir la composition, avec un rapport molaire méthylhydroxyéthylsulfonate à l'acide gras de 1:0,91 à 1:1,09 ;
dans lequel l'acide gras est un acide gras en C6 à C24.

7. Procédé de préparation selon la revendication 6, dans lequel, dans l'étape 1, une durée de réaction de la réaction d'ouverture de cycle est de 0,6 à 1,0 heure, une pression de réaction de la réaction d'ouverture de cycle est de 0 à 0,04 MPa et un pH de réaction de la réaction d'ouverture de cycle est de 5,6 à 6,6, et le produit de réaction est obtenu par purification à travers la colonne PFP après l'achèvement de la réaction d'ouverture de cycle.

8. Procédé de préparation selon la revendication 6, dans lequel, dans l'étape 2, le catalyseur est choisi dans le groupe constitué par l'acide p-toluènesulfonique et ses sels, l'acide méthylhydroxyéthylsulfonique et ses sels, l'acide phosphorique et ses sels, l'acide sulfurique et ses sels, l'acide citrique et ses sels, l'oxyde de zirconium, l'oxyde de magnésium, l'oxyde de zinc, l'oxyde d'aluminium et une combinaison de ceux-ci ; et une quantité de catalyseur est de 0,2 à 0,9 % en poids, une température de réaction dans l'étape 2 est de 205,0 à 230,0 °C, une durée de réaction dans l'étape 2 est de 6,5 à 8,5 heures et une pression de réaction dans l'étape 2 est de 0 MPa ; et
la réaction dans l'étape 2 est poursuivie tout en procédant à une distillation afin d'éliminer une partie de l'acide gras n'ayant pas réagi à une température de 205,0 à 230,0 °C sous une pression de 0 MPa pendant 6,0 à 8,0 heures.

9. Utilisation de la composition selon l'une quelconque des revendications 1 à 5, comme principe actif ayant un effet moussant dans un produit chimique d'usage quotidien, ou comme principe actif ayant un effet épaississant dans un produit chimique d'usage quotidien.

10. Agent moussant, comprenant la composition selon l'une quelconque des revendications 1 à 5.

11. Agent épaississant, comprenant la composition selon l'une quelconque des revendications 1 à 5.

12. Produit chimique d'usage quotidien, dans lequel le produit chimique d'usage quotidien contient de 0,1 à 15,0 % en poids de la composition selon l'une quelconque des revendications 1 à 5.

13. Produit chimique d'usage quotidien selon la revendication 12, dans lequel le produit chimique d'usage quotidien comprend un détergent.
